# EUROPEAN PATENT APPLICATION

(11) **EP 3 127 618 A1**
(43) Date of publication of application: **08.02.2017**
(21) Application number: 15773631.5
(22) Date of filing: 03.04.2015
(51) Int. Cl.: B05C 1/02, B05D 1/28, B05D 7/02, B29C 49/02, B65D 1/00

(54) **PREFORM COATING DEVICE, METHOD FOR MANUFACTURING PREFORM, AND METHOD FOR MANUFACTURING PLASTIC BOTTLE**

(30) Priority: 04.04.2014 JP 2014078114
(71) Applicant: Suntory Holdings Limited, Osaka-shi, Osaka 530-8203 (JP)
(72) Inventor: SUGIMORI, Tomohiko, Tokyo 135-0091 (JP); YAMANE, Ryo, Kawasaki-shi Kanagawa 211-0067 (JP); TOMARI, Ichiro, Tokyo 135-0091 (JP); SUZUKI, Hideyuki, Tokyo 135-0091 (JP)
(74) Representative: Keirstead, Tanis Evelyne
(86) International application number: PCT/JP2015/060638
(87) International publication number: WO 2015/152408

(57) **Abstract**

The present invention provides a preform coating device (10) provided with a cylindrical transfer roller (11) for rotating about a center shaft (111), and an application device for applying a coating liquid in a predetermined thickness to an external peripheral face of the transfer roller (11), the external peripheral face of the transfer roller (11) rotating so as to touch an external peripheral face of a preform (1), and the coating liquid thereby being transferred from the external peripheral face of the transfer roller (11) to the external peripheral face of the preform (1).

## Description

### Technical Field

The present invention relates to a preform coating device for coating a preform of a plastic bottle with a coating solution, a method for manufacturing a preform, and a method for manufacturing a plastic bottle.

### Background Art

Today, plastic containers made of polyethylene terephthalate (PET bottles) and other plastic bottles are being widely used for holding beverages or food. The plastic bottles are formed by expanding the test tube shaped preforms by stretch blow molding.

As shown in Japanese Patent Publication No. 2012-250771, to reduce the passage of gases such as oxygen and carbon dioxide between the inside and outside of a plastic bottle, it is known to form a barrier coating on the outer circumferential surface of the preform. The barrier coating is formed by applying a coating solution to the outer circumferential surface of the preform and drying the outer circumferential surface of the preform.

### Summary of Invention

### Technical Problem

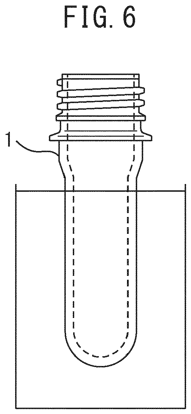

However, a coating solution is typically applied, as shown in FIG. 6, by dipping the preform in the coating solution in the vertical direction. In this case, at the outer circumferential surface of the preform, due to gravity, the film thickness of the coating solution gradually increases the further downward in the vertical direction.

For this reason, the barrier performance reducing the passage of gases becomes uneven on the outer circumferential surface of the preform and in turn the plastic bottle. Further, if trying to make the coating solution completely dry in the state where the film thickness is uneven, the parts where the film thickness is thin are sometimes excessively heated and whitened. In particular, if dipping the preform in a coating solution in the vertical direction, the bottom part of the preform is also applied with the coating solution, so the drying time of the coating solution becomes longer. For this reason, if making the coating solution of the bottom part with a thick film thickness dry, the cylindrical body part of the preform with a thin film thickness becomes excessively heated, so tends to whiten. These whitened preforms or plastic bottles often are deemed as defects in the final inspection process and cannot be used. Further, if the preform whitens when blow molding the plastic bottle, it results in poor stretching in the blowing process and a predetermined size of plastic bottle cannot be formed or cracks end up occurring in some cases.

Therefore, the present invention was made in consideration of the above problem and has as its object to make the film thickness of the coating solution applied to the outer circumferential surface of a preform for a plastic bottle thin and uniform so as to reduce the occurrence of defects of a preform or plastic bottle. Solution to Problem

In a first embodiment of the present invention, there is provided a preform coating device comprising a columnar shaped transfer roller rotating about its center axis and an application device for applying a coating solution with a predetermined thickness to an outer circumferential surface of the transfer roller, wherein the outer circumferential surface of the transfer roller rotates in contact with an outer circumferential surface of a preform whereby the coating solution is transferred from the outer circumferential surface of the transfer roller to the outer circumferential surface of the preform.

In the first embodiment of the present invention, preferably, the application device is a die coater formed with a slot and configured so as to discharge coating solution from the slot to the outer circumferential surface of the transfer roller.

In the first embodiment of the present invention, preferably, the preform coating device further comprises a conveyor device conveying the preform, and a conveyance path of the preform includes a substantially arc shaped path along the outer circumferential surface of the transfer roller.

In the first embodiment of the present invention, preferably, the coating solution is transferred from the outer circumferential surface of the transfer roller to only a cylindrical body part of the preform.

In the first embodiment of the present invention, preferably, the preform coating device further comprises a scraper configured so as to scrape off the coating solution not transferred to the outer circumferential surface of the preform from the outer circumferential surface of the transfer roller.

In the first embodiment of the present invention, preferably, the preform coating device further comprises a solution recovery tank recovering the coating solution scraped off by the scraper and a defoaming device removing bubbles from the recovered coating solution.

In a second embodiment of the present invention, there is provided a method for manufacturing a preform comprising: a step of applying a coating solution with a predetermined thickness to an outer circumferential surface of a columnar shaped transfer roller rotating about its center axis by an application device, a step of conveying a preform on the outer circumferential surface of the transfer roller and transferring the coating solution from the outer circumferential surface of the transfer roller to the outer circumferential surface of the preform, and a step of drying the outer circumferential surface of the preform.

In the second embodiment of the present invention, preferably, the coating solution is transferred from the outer circumferential surface of the transfer roller to only a cylindrical body part of the preform.

In the second embodiment of the present invention, preferably, the preform is continuously conveyed on the outer circumferential surface of the transfer roller.

In the second embodiment of the present invention, preferably, the coating solution not transferred to the outer circumferential surface of the preform is recovered, is deformed and is again applied to the outer circumferential surface of the transfer roller by the application device.

In the second embodiment of the present invention, preferably, the coating solution has a viscosity of 100 mPa·s or more.

In a third embodiment of the present invention, there is provided a method for manufacturing a plastic bottle including stretch blow molding a preform manufactured by the second embodiment of the present invention.

### Advantageous Effects of Invention

According to the present invention, it is possible to make the film thickness of the coating solution applied to the outer circumferential surface of a preform for a plastic bottle uniformly thin and in turn reduce the occurrence of defects of a preform or plastic bottle.

### Brief Description of Drawings

[FIG. 1] FIG. 1 shows a preform for a plastic bottle.
[FIGS. 2] FIG. 2A to FIG. 2D shows a stretch blow molding method for forming a plastic bottle from a preform.
[FIG. 3] FIG. 3 shows a plastic bottle formed from a preform.
[FIG. 4] FIG. 4 is a schematic view of a preform coating device according to an embodiment of the present invention.
[FIG. 5] FIG. 5 is a schematic perspective view of a die coater.
[FIG. 6] FIG. 6 shows a conventional method of applying a coating solution to a preform.
[FIG. 7] FIG. 7 shows another method for supplying a coating solution to an outer circumferential surface of a transfer roller.
[FIG. 8] FIG. 8 shows the state in the preform coating device of FIG. 7 where excess coating solution is dropped into a solution dipping tank by a blade.

### Description of Embodiments

Below, embodiments of the present invention will be explained with reference to the attached drawings. Note that, these embodiments do not limit the present invention. Further, the components of the present embodiment include components which a person skilled in the art could use instead or which would be easy to use instead and components which are substantially the same.

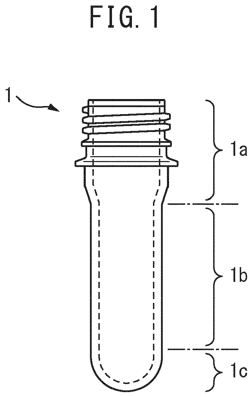

First, referring to FIG. 1 to FIG. 3, the method of forming a plastic bottle will be explained. Note that, in this Description, a "plastic bottle" means a bottle made of a plastic like polyethylene terephthalate (PET), polypropylene (PP), and polyethylene (PE) and is not limited to a PET bottle.

FIG. 1 shows a preform 1 for a plastic bottle. The preform 1 is formed from a resin by the injection molding method or the PCM (preform compression molding) method. The preform 1 is comprised of a mouth part 1a fitting with a cap of the plastic bottle, a cylindrical body part 1b adjoining the mouth part 1a, and a bottom part 1c closing one end of the cylindrical body part 1b and has a shape like a test tube. At the outer circumferential surface of the mouth part 1a, a male thread for engaging with the female thread of the cap is formed. The end part of the mouth part 1a side of the preform 1 is open.

After forming the preform 1, the outer circumferential surface of the preform 1 is formed with a barrier coating. The barrier coating is formed by applying a coating solution to the outer circumferential surface of the preform 1 and drying the outer circumferential surface of the preform 1. By doing this, the passage of a gas such as oxygen and carbon dioxide between the inside and outside of the plastic bottle formed from the preform 1 is reduced and storage life of the beverage etc. contained can be extended. Further, the scratch resistance, moisture resistance, etc. of the plastic bottle can be improved.

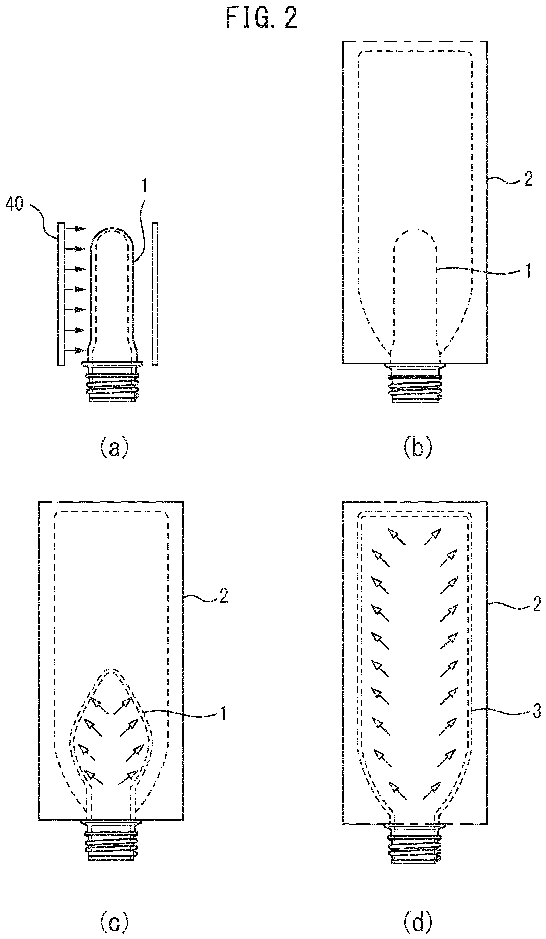

A plastic bottle is formed from the preform 1 by stretch blow molding. FIGS. 2A to 2D show the stretch blow molding method for forming a plastic bottle 3 from the preform 1.

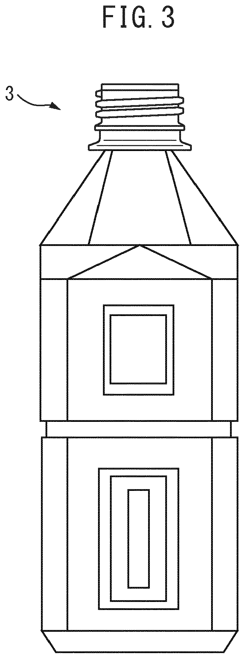

First, as shown in FIG. 2A, the preform 1 is heated by a heater 40. Next, as shown in FIG. 2B, the preform 1 is inserted into a mold 2 and the mold 2 is closed. Next, as shown in FIG. 2C, the preform 1 is stretched by a stretch rod (not shown) in the vertical direction and is stretched by pressurized air in the horizontal direction. Next, as shown in FIG. 2D, if the preform 1 is expanded to the desired shape, the inside surface of the plastic bottle 3 is cooled by cooling air. Finally, the plastic bottle 3 is taken out from the mold 2. FIG. 3 shows a plastic bottle 3 formed from the preform 1.

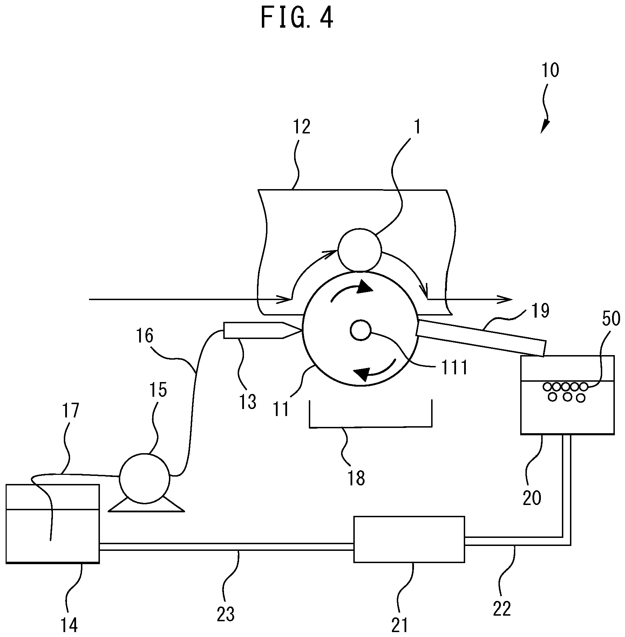

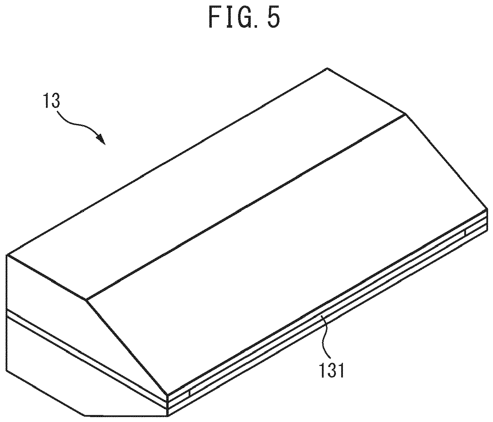

Below, referring to FIG. 4 and FIG. 5, a preform coating device according to an embodiment of the present invention will be explained.

FIG. 4 is a schematic view of a preform coating device 10 according to an embodiment of the present invention. The preform coating device 10 applies a coating solution to the outer circumferential surface of the preform 1. The preform coating device 10 comprises a transfer roller 11, a conveyor device 12 conveying a preform 1 on the outer circumferential surface of the transfer roller 11, a die coater 13 discharging a coating solution to the outer circumferential surface of the transfer roller 11, a solution holding tank 14 holding the coating solution to be supplied to the die coater 13, and a pump 15 supplying the coating solution from the solution holding tank 14 to the die coater 13.

The transfer roller 11 has a columnar shape and rotates about its center axis 111. The transfer roller 11 is rotated by turning a handle connected to the center axis 111 by hand or by using a motor etc. to make the transfer roller 11 rotate about the center axis 111.

The conveyance path of the preform 1 is shown by the arrows in FIG. 4. The conveyance path of the preform 1 by the conveyor device 12 includes a substantially arc shaped path along the outer circumferential surface of the transfer roller 11. If the preform 1 is conveyed by the conveyor device 12 on the outer circumferential surface of the transfer roller 11, the outer circumferential surface of the preform 1 continuously rotates in contact with the outer circumferential surface of the transfer roller 11, to which the coating solution is applied, along the substantially arc shaped path along the outer circumferential surface of the transfer roller 11. Due to this, the preform 1 can be made to move while transferring the coating solution from the outer circumferential surface of the transfer roller 11 to the outer circumferential surface of the preform 1. The circumferential direction length of the transfer roller 11 of the part contacting the preform 1 is the circumferential direction length of the preform 1 or more so that the coating solution is transferred over the entire circumference of the preform 1. In this example, the outer circumferential surface of the preform 1 rotates in contact with the outer circumferential surface of the transfer roller 11 over substantially half the circumference of the transfer roller 11. Note that, the path of conveyance of the preform 1 on the transfer roller 11 may be a path other than the substantially arc shaped path along the outer circumferential surface of the transfer roller 11 so long as the preform 1 can continuously rotate in contact with the transfer roller 11.

The conveyor device 12 can rotatably fasten the preform 1. As shown by the arrows in FIG. 4, preforms 1 are conveyed by the conveyor device 12 one at a time on the outer circumferential surface of the transfer roller 11. Further, a plurality of preforms 1 may be rotatably fastened at predetermined intervals to the conveyor device 12 and be continuously conveyed by the conveyor device 12 on the outer circumferential surface of the transfer roller 11. Further, preforms 1 may be rotated so as to move along the outer circumferential surface of the transfer roller 11 one at a time by manual operation.

The die coater 13 is arranged with its front end adjoining or approaching the outer circumferential surface of the transfer roller 11. FIG. 5 is a schematic perspective view of the die coater 13. As shown in FIG. 5, the die coater 13 is formed with an elongated slot 131. The coating solution is discharged in a sheet shape from the elongated slot 131 to the outer circumferential surface of the transfer roller 11. Note that, the preform coating device 10 may be provided with another application device configured to apply the coating solution with a predetermined thickness to the outer circumferential surface of the transfer roller 11, instead of the die coater 13.

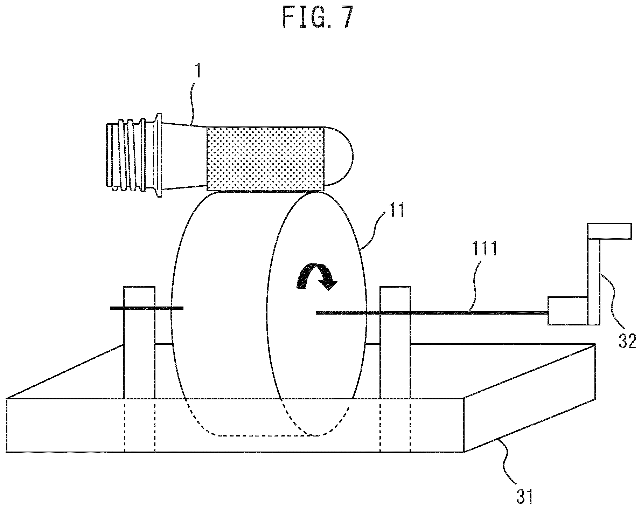

Another method may also be considered as the method for supplying the coating solution to the outer circumferential surface of the transfer roller 11. For example, as shown in FIG. 7, it is also possible to arrange the solution dipping tank 31, in which the coating solution is poured, below the transfer roller 11 and directly dip the transfer roller 11 in the coating solution. In this case, if using the handle 32 etc. to make the transfer roller 11 rotate, the coating solution is deposited on the outer circumferential surface of the transfer roller 11, then, if the outer circumferential surface of the transfer roller 11 rotates in contact with the outer circumferential surface of the preform 1, the coating solution is transferred from the outer circumferential surface of the transfer roller 11 to the outer circumferential surface of the preform 1.

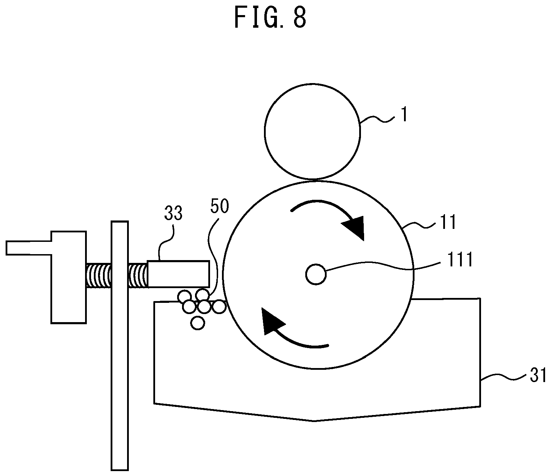

However, in this method, as shown in FIG. 8, when making the excess coating solution drop into the solution dipping tank 31 by the blade 33 so as to make the film thickness of the coating solution supplied to the outer circumferential surface of the transfer roller 11 constant, the coating solution draws air along with it and sometimes is formed with bubbles inside the solution dipping tank 31. In this case, the coating solution containing the bubbles 50 is supplied from the solution dipping tank 31 to the outer circumferential surface of the transfer roller 11 to be transferred to the outer circumferential surface of the preform 1, so the film thickness of the coating solution becomes uneven on the outer circumferential surface of the preform 1. This problem easily occurs in particular when using a high viscosity coating solution, since the bubbles are difficult to remove from the coating solution.

On the other hand, in the present embodiment, the minimum extent of coating solution is constantly discharged from the elongated slot 131 of the die coater 13 directly to the outer circumferential surface of the transfer roller 11 so that the solution becomes a predetermined film thickness, so bubbles do not easily form in the coating solution. Therefore, it is possible to make the film thickness of the coating solution coated on the outer circumferential surface of the preform 1 uniformly thin and in turn reduce the occurrence of defects of the preform 1 or plastic bottle.

As shown in FIG. 4, the die coater 13 is connected through a first hose 16 to the pump 15. The pump 15 is connected through a second hose 17 to the solution holding tank 14. To further reduce the formation of bubbles at the coating solution, the pump 15 is preferably a non-pulsation pump. The solution holding tank 14 is filled with the desired coating solution before starting the coating. Further, as explained later, the coating solution not transferred to the outer circumferential surface of the preform 1 is returned to the solution holding tank 14 for reuse. If the amount of the coating solution inside the solution holding tank 14 becomes smaller than a predetermined amount, the coating solution is refilled in the solution holding tank 14.

In general, the mouth part 1a and bottom part 1c of the preform 1 are sufficiently low in gas barrier property even without the coating. Further, the bottom part 1c is easily abraded compared with other parts, so if a coating is formed on the bottom part 1c, the coating on the bottom part 1c is liable to crack.

As the coating solution, for example, a polyvinyl alcohol (PVA) solution having a gas barrier property and a non-water soluble coating agent protecting this are used. Usually the outer circumferential surface of the preform 1 is first formed with the PVA coating, then is given the protective coating to cover the PVA coating. In this case, the problem can arise that since PVA is hydrophilic, if the protective coating of the bottom part 1c cracks, the exposed PVA coating will end up being redissolved in the water.

Therefore, the coating solution is preferably transferred from the outer circumferential surface of the transfer roller 11 to only the cylindrical body part 1b of the preform 1. Due to this, it is possible to shorten the drying time of the coating solution coated on the preform 1. Further, cylindrical body part 1b has a simple cylindrical shape, so the coating of the coating solution by the transfer roller 11 becomes easier than other parts.

As shown in FIG. 4, the preform coating device 10 further comprises a solution receiving tank 18 receiving the coating solution dropped from the transfer roller 11, a scraper 19 scraping off the coating solution not transferred to the outer circumferential surface of the preform 1 from the outer circumferential surface of the transfer roller 11, and a solution recovery tank 20 recovering the coating solution scraped off by the scraper 19.

The scraper 19 contacts the transfer roller 11 over the entire axial direction of the transfer roller 11. Due to this, the majority of the coating solution not transferred to the outer circumferential surface of the preform 1 can be recovered. Further, the scraper 19 extends downward at a slant from the outer circumferential surface of the transfer roller 11 toward the solution recovery tank 20. Due to this, the coating solution scraped off by the scraper 19 flows into the solution recovery tank 20 by gravity. At this time, the coating solution draws air along with it and sometimes is formed with bubbles inside the solution recovery tank 20.

As shown in FIG. 4, the preform coating device 10 further comprises a defoaming device 21 removing bubbles from the recovered coating solution. The defoaming device 21 is connected through a first pipe 22 to the solution recovery tank 20 and through a second pipe 23 to the solution holding tank 14. The defoaming device 21 removes the bubbles 50 formed in the solution recovery tank 20. The defoamed coating solution is returned to the solution holding tank 14 and is again supplied by the pump 15 to the die coater 13.

Below, the methods for manufacturing the preform 1 and plastic bottle 3 will be explained.

First, the injection molding method or PCM method is used to form a preform 1 from a resin. Next, the coating solution is applied to the outer circumferential surface of the formed preform 1. Note that, to improve the adhesion of the coating solution on the preform 1, it is possible to treat the surface of the outer circumferential surface of the preform 1 before applying the coating solution. The surface treatment is, for example, plasma treatment, corona treatment, or electron beam treatment.

The coating solution is applied by discharging the coating solution from a slot 131 of the die coater 13 to the outer circumferential surface of the columnar shaped transfer roller 11 rotating about its center axis 111 and by conveying the preform 1 on the outer circumferential surface of the transfer roller 11 and transferring the coating solution from the outer circumferential surface of the transfer roller 11 to the outer circumferential surface of the preform 1. The coating solution not transferred to the outer circumferential surface of the preform 1 is recovered by the scraper 19. After that, the recovered coating solution is cleared of bubbles by the defoaming device 21 and again discharged to the outer circumferential surface of the transfer roller 11 from the slot 131 of the die coater 13. Note that, the coating solution may be supplied on the outer circumferential surface of the transfer roller 11 by another application device configured to apply the coating solution with a predetermined thickness to the outer circumferential surface of the transfer roller 11, instead of the die coater 13.

As explained above, the coating solution is preferably transferred from the outer circumferential surface of the transfer roller 11 to only the cylindrical body part 1b of the preform 1. Further, the circumferential direction length of the transfer roller 11 at the part contacting the preform 1 is the circumferential direction length of the preform 1 or more. Preforms 1 can be continuously conveyed by the conveyor device 12 on the outer circumferential surface of the transfer roller 11. Due to this, it is possible to efficiently apply a coating solution over the entire circumference of the outer circumferential surfaces of a plurality of preforms 1.

After applying the coating solution, the outer circumferential surface of the preform 1 is made to dry on the conveyor device 12. The drying is performed in two stages. In the first stage, the preform 1 is rapidly heated by a carbon heater. In the second stage, the preform 1 is dried by hot air by a far infrared ray heater to be held in temperature. As a result, a coating is formed on the outer circumferential surface of the preform 1.

As the coating solution, for example, a PVA solution having a gas barrier property and a non-water soluble coating agent protecting this are used. In this case, the outer circumferential surface of the preform 1 is first formed with the PVA coating, then, to prevent the PVA coating from being exposed, is given the protective coating to cover the PVA coating. The double layer coating can be formed by using a single preform coating device 10 while changing the coating solutions or by using two preform coating devices 10. Note that, the non-water soluble coating agent protecting the PVA is, for example, a polyolefin dispersion solution, various modified polyolefin dispersion solutions, a polyvinyl butyral (PVB) solution, etc.

Further, the non-water soluble coating agent protecting the PVA is typically low in viscosity and applied thinner than the PVA solution, so the drying time is shorter than the PVA solution. For this reason, excessive heating seldom causes the preform 1 to whiten. Therefore, the non-water soluble coating agent protecting the PVA may be applied by dipping the preform 1 in the vertical direction like in the past. In this case, the bottom part 1c of the preform 1 can also be formed with a protective coating, but the PVA coating is not formed on the bottom part 1c, and therefore even if the protective coating of the bottom part 1c cracks, the problem of the hydrophilic PVA redissolving in water will not arise.

Other examples of the coating solution are a water-soluble polyamide, water-soluble polyester, polyvinylidene chloride (PVDC), polyacrylonitrile, ethylene-vinyl alcohol copolymer resin (EVOH), polyglycolic acid, and other solutions of barrier resins and mixed solutions of these with inorganic matter, oxide absorbents, etc., an epoxy-based, urethane-based, or phenol-based thermosetting binder, a hot melt resin or other thermoplastic binder, or a coating material like an aqueous ink or solvent-based ink.

As explained above, the problem of the film thickness of the coating solution becoming uneven at the outer circumferential surface of the preform 1 easily occurs in particular when using a high viscosity coating solution. For this reason, if applying the present embodiment when using the high viscosity coating solution, it is possible to obtain a more remarkable effect. For example, the viscosity of the coating solution used in the present embodiment is preferably 1 mPa·s or more, more preferably 100 mPa·s or more.

The plastic bottle 3 is manufactured by stretch blow molding a preform 1 manufactured by the above method.

### Reference Signs List

- 1.: preform
- 1a.: mouth part
- 1b.: cylindrical body part
- 1c.: bottom part
- 2.: mold
- 3.: plastic bottle
- 10.: preform coating device
- 11.: transfer roller
- 111.: center axis
- 12.: conveyor device
- 13.: die coater
- 131.: slot
- 14.: solution holding tank
- 15.: pump
- 16.: first hose
- 17.: second hose
- 18.: solution receiving tank
- 19.: scraper
- 20.: solution recovery tank
- 21.: defoaming device
- 22.: first pipe
- 23.: second pipe
- 31.: solution dipping tank
- 32.: handle
- 33.: blade
- 40.: heater
- 50.: bubbles

## Claims

1. A preform coating device comprising
a columnar shaped transfer roller rotating about its center axis and
an application device for applying a coating solution with a predetermined thickness to an outer circumferential surface of the transfer roller, wherein
the outer circumferential surface of the transfer roller rotates in contact with an outer circumferential surface of a preform whereby the coating solution is transferred from the outer circumferential surface of the transfer roller to the outer circumferential surface of the preform.

2. The preform coating device according to claim 1, wherein the application device is a die coater formed with a slot and configured so as to discharge coating solution from the slot to the outer circumferential surface of the transfer roller.

3. The preform coating device according to claim 1, further comprising a conveyor device conveying the preform, wherein
a conveyance path of the preform includes a substantially arc shaped path along the outer circumferential surface of the transfer roller.

4. The preform coating device according to any one of claims 1 to 3, wherein the coating solution is transferred from the outer circumferential surface of the transfer roller to only a cylindrical body part of the preform.

5. The preform coating device according to any one of claims 1 to 4, further comprising a scraper configured so as to scrape off the coating solution not transferred to the outer circumferential surface of the preform from the outer circumferential surface of the transfer roller.

6. The preform coating device according to claim 5, further comprising a solution recovery tank recovering the coating solution scraped off by the scraper and a defoaming device removing bubbles from the recovered coating solution.

7. A method for manufacturing a preform comprising:
a step of applying a coating solution with a predetermined thickness to an outer circumferential surface of a columnar shaped transfer roller rotating about its center axis by an application device,
a step of conveying a preform on the outer circumferential surface of the transfer roller and transferring the coating solution from the outer circumferential surface of the transfer roller to the outer circumferential surface of the preform, and
a step of drying the outer circumferential surface of the preform.

8. The method for manufacturing a preform according to claim 7, wherein the coating solution is transferred from the outer circumferential surface of the transfer roller to only a cylindrical body part of the preform.

9. The method for manufacturing a preform according to claim 7 or 8, wherein the preform is continuously conveyed on the outer circumferential surface of the transfer roller.

10. The method for manufacturing a preform according to any one of claims 7 to 9, wherein the coating solution not transferred to the outer circumferential surface of the preform is recovered, is deformed and is again applied to the outer circumferential surface of the transfer roller by the application device.

11. The method for manufacturing a preform according to any one of claims 7 to 10, wherein the coating solution has a viscosity of 100 mPa·s or more.

12. A method for manufacturing a plastic bottle including stretch blow molding a preform manufactured by the method for manufacturing a preform according to any one of claims 7 to 11.
